# EUROPÄISCHE PATENTSCHRIFT

(11) **EP 2 355 990 B1**
(45) Veröffentlichungstag und Bekanntmachung des Hinweises auf die Patenterteilung: **02.07.2014**
(21) Anmeldenummer: 09751928.4
(22) Anmeldetag: 16.11.2009
(51) Int. Cl.: B60G 17/0165, B60G 17/0195, B60T 8/172, B60W 40/06

(54) **VERFAHREN ZUR ERMITTLUNG DES FAHRBAHNZUSTANDS EINES VON EINEM KRAFTFAHRZEUG BEFAHRENEN STRECKENABSCHNITTS**
METHOD FOR DETERMINING THE ROADWAY CONDITION OF A ROAD SECTION DRIVEN UPON BY A MOTOR VEHICLE
PROCÉDÉ DE DÉTERMINATION DE L'ÉTAT DE LA CHAUSSÉE D'UN TRONÇON DE ROUTE EMPRUNTÉ PAR UN VÉHICULE AUTOMOBILE

(30) Priorität: 10.12.2008 DE 102008054476
(43) Veröffentlichungstag der Anmeldung: 17.08.2011
(73) Patentinhaber: ZF Friedrichshafen AG, 88038 Friedrichshafen (DE)
(72) Erfinder: KEMLER, Johannes, 88697 Bermatingen (DE); WÜRTHNER, Maik, 88048 Friedrichshafen (DE); STAUDINGER, Joachim, 88214 Ravensburg (DE)
(86) Internationale Anmeldenummer: PCT/EP2009/065206
(87) Internationale Veröffentlichungsnummer: WO 2010/066541

(56) Entgegenhaltungen:
- DE-B4- 19 626 398
- DE-C2- 4 133 238
- JP-A- 3 092 465
- JP-A- 4 118 310
- JP-A- 61 271 109
- KR-A- 20040 088 616
- US-A- 4 672 547
- US-A- 4 837 727
- US-A- 5 487 006
- US-A- 6 154 698
- US-A1- 2003 065 435

## Beschreibung

Die Erfindung betrifft ein Verfahren zur Ermittlung des Fahrbahnzustands eines von einem Kraftfahrzeug befahrenen Streckenabschnitts nach dem Oberbegriff des Anspruchs 1, wie offenbart in der Anmeldung US 4,837,727 A.

Automatisiert steuerbare Fahrzeugeinrichtungen von Kraftfahrzeugen, wie beispielsweise ein Antiblockiersystem (ABS) oder ein automatisiertes Schaltgetriebe, erfordern abhängig vom Einsatzgebiet des Kraftfahrzeugs jeweils unterschiedliche Steuerungseigenschaften, um z.B. im Hinblick auf eine hohe Fahrstabilität und einen geringen Bremsweg ein optimales Bremsverhalten einer ABS-gesteuerten Betriebsbremse oder im Hinblick auf einen geringen Verschleiß im Antriebsstrang und einen niedrigen Kraftstoffverbrauch des Antriebsmotors ein optimales Schaltverhalten eines automatisierten Schaltgetriebes zu erreichen. So sind bei einer Geländefahrt, die allgemein als eine Fahrt auf einer relativ unebenen und unbefestigten Fahrbahn beschrieben werden kann, im Vergleich zu einer Straßenfahrt aufgrund des losen Untergrunds bei einem Antiblockiersystem zur Erzielung eines kurzen Bremsweges höhere Radverzögerungs- und Blockierdauergrenzwerte vorteilhaft. Ebenso sind bei einer Geländefahrt aufgrund des höheren Fahrwiderstands bei einem automatisierten Schaltgetriebe zur Vermeidung eines hohen schaltungsbedingten Antriebsdrehmomenteinbruchs zweckmäßig höhere Schaltdrehzahlen und kleinere Gangsprünge als bei einer Straßenfahrt vorgesehen.

Bei Kraftfahrzeugen, die wie geländegängige Personenwagen (SUVs) und Baustellen-Lastkraftwagen sowohl auf befestigten Straßen als auch im Gelände eingesetzt werden können, ist daher eine Umschaltung des jeweiligen Steuerungsprogramms entsprechender Fahrzeugeinrichtungen von Straßenfahrt auf Geländefahrt und umgekehrt von Geländefahrt auf Straßenfahrt erforderlich, wobei die Umschaltung des Steuerungsprogramms jeweils durch einen Wechsel des gesamten oder eines Teils des Steuerungsprogramms oder durch einen Austausch von bestimmten Steuerungsparametern innerhalb eines Steuerungsprogramms erfolgen kann. Bei einigen bekannten Fahrzeugeinrichtungen ist vorgesehen, dass die Umschaltung des betreffenden Steuerungsprogramms von dem Fahrer manuell vorgenommen werden muss.

In der EP 0 475 010 B1 ist beispielsweise eine ABS-Steuerung der Betriebsbremse eines Kraftfahrzeugs beschrieben, die einen speziellen Geländemodus aufweist, der von dem Fahrer durch die Betätigung eines Geländeschalters aktivierbar ist. Bei aktiviertem Geländemodus wird beim Bremsen ein kurzzeitiges Blockieren der geregelten Räder dadurch erzeugt, dass während des Auftretens eines Radverzögerungssignals eines Raddrehzahlsensors Bremsdruck in den betreffenden Radbremszylinder eingesteuert wird, bis das betreffende Rad blockiert ist, und dass dieser Bremsdruck nachfolgend für eine festgelegte Haltedauer konstant gehalten wird. Bei einer Rückkehr auf die Straße muss der Geländemodus von dem Fahrer durch eine erneute Betätigung des Geländeschalters wieder deaktiviert werden, um bei der nachfolgenden Straßenfahrt ein dafür optimiertes Bremsverhalten der Betriebsbremse zu erreichen.

Aus der US 4 569 255 B1 ist eine Getriebesteuerung eines automatischen Schaltgetriebes eines Kraftfahrzeugs bekannt, die einen speziellen Geländemodus für Offroad-Betrieb bzw. für eine Fahrt unter hohem Fahrwiderstand aufweist, der von dem Fahrer durch eine Verstellung des Wählhebels in eine Off-Highway-Stellung innerhalb der Wählgasse der Schaltkonsole aktivierbar ist. Bei aktiviertem Geländemodus werden insbesondere Hochschaltungen nach bestimmten Schaltkennlinien ausgeführt, die derart ausgelegt sind, dass die Motorleistung des Antriebsmotors nach einer Hochschaltung mindestens so hoch ist wie vor der Hochschaltung. Bei einer Rückkehr auf die Straße muss der Fahrer durch eine Verstellung des Wählhebels in eine Highway-Stellung den Geländemodus deaktivieren bzw. einen Straßenmodus aktivieren, um bei der nachfolgenden Straßenfahrt ein dafür optimiertes Schaltverhalten des Schaltgetriebes mit einem geringen Verschleiß im Antriebsstrang und einem niedrigen Kraftstoffverbrauch des Antriebsmotors zu erreichen.

Eine manuelle Umschaltung zwischen einem Straßenmodus und einem Geländemodus birgt jedoch die Gefahr, dass die Aktivierung des jeweils optimalen Steuerungsprogramms von dem Fahrer versehentlich oder absichtlich unterlassen wird, d.h. dass die betreffende Fahrzeugeinrichtung bei einer Straßenfahrt im Geländemodus oder bei einer Geländefahrt im Straßenmodus betrieben wird. Dies kann bei einer betroffenen ABS-Steuerung der Betriebsbremsen zu einer gefährlichen Beeinträchtigung der Fahrstabilität und einer Verlängerung des Bremsweges bei einem Bremsmanöver und bei einer betroffenen Getriebesteuerung eines automatisierten Schaltgetriebes zu einem überdurchschnittlichen Verschleiß im Antriebsstrang und einem erhöhten Kraftstoffverbrauch des Antriebsmotors führen.

Zur Vermeidung dieser Nachteile und zur Erhöhung des Fahrkomforts sind daher mehrere Verfahren zur automatischen Ermittlung des Fahrbahnzustands eines von einem Kraftfahrzeug befahrenen Streckenabschnitts entwickelt worden, bei denen zumindest zwischen einer Straßenfahrt und einer Geländefahrt unterschieden und das Steuerungsprogramm einer automatisiert steuerbaren Fahrzeugeinrichtung bei einem erkannten Wechsel des Fahrbahnzustands selbsttätig angepasst wird.

Aus der DE 196 26 398 B4 ist ein entsprechendes Verfahren zur automatischen Ermittlung des Zustands einer Fahrbahnoberfläche bekannt, bei dem die Drehzahlsignale von Raddrehzahlsensoren in einem vorgegebenen Zeittakt abgetastet und daraus Radbeschleunigungssignale abgeleitet werden. Durch eine Hochpassfilterung wird aus den Radbeschleunigungssignalen der für die Bestimmung des Zustands der Fahrbahnoberfläche relevante Hochfrequenzanteil extrahiert und daraus jeweils ein Varianzwert bestimmt. Durch Vergleich des jeweiligen Varianzwertes mit einem vorgegebenen Bestimmungspegel wird entschieden, ob sich das Kraftfahrzeug auf einer guten Fahrbahnoberfläche (Straße) oder auf einer schlechten Fahrbahnoberfläche (Gelände) befindet. Sowohl die Grenzfrequenz des Hochpassfilters als auch die Höhe des Bestimmungspegels müssen an die aktuelle Fahrgeschwindigkeit des Kraftfahrzeugs angepasst werden. Dieses Verfahren ist insgesamt relativ kompliziert und erfordert eine hohe Rechner- und Speicherkapazität des Steuergerätes. Ebenso ist die Applizierung des Verfahrens, d.h. die Anpassung an ein bestimmtes Fahrzeugmodel, relativ aufwendig.

Ein weiteres Verfahren zur Ermittlung eines die Fahrbahnoberfläche repräsentierenden Signals, d.h. des Fahrbahnzustands eines von einem Kraftfahrzeug befahrenen Streckenabschnitts, ist in der DE 41 33 238 C2 beschrieben. Dieses bekannte Verfahren sieht vor, dass das Signal eines Federwegsensors mindestens einer Radaufhängung des Kraftfahrzeugs erfasst und daraus über ein inverses Fahrzeugmodell ein zumindest näherungsweise das Fahrbahnprofil wiedergebendes Signal berechnet wird. Aus diesem Signal werden dann Kenngrößen für den Verlauf der Fahrbahnoberfläche abgeleitet, die zur Anpassung von Steuerungsprogrammen von Regelungs-, Steuerungs- und Überwachungssystemen des Kraftfahrzeugs dienen. Auch dieses Verfahren ist relativ kompliziert und nur mit hohem Aufwand applizierbar.

Vor diesem Hintergrund liegt der Erfindung die Aufgabe zugrunde, ein Verfahren zur Ermittlung des Fahrbahnzustands eines von einem Kraftfahrzeug befahrenen Streckenabschnitts vorzuschlagen, das programmtechnisch einfach herstellbar ist, eine geringe Rechner- und Speicherkapazität des hierfür genutzten Steuergerätes erfordert, und mit geringem Aufwand applizierbar, d.h. an verschiedene Fahrzeugmodelle anpassbar ist.

Diese Aufgabe ist durch ein Verfahren mit den Merkmalen des Hauptanspruchs gelöst, während vorteilhafte Ausgestaltungen und Weiterbildungen Gegenstand der Unteransprüche sind.

Demnach geht die Erfindung aus von einem Verfahren zur Ermittlung des Fahrbahnzustands eines von einem Kraftfahrzeug befahrenen Streckenabschnitts, bei dem mittels mindestens eines Sensors ein Betriebsparameter des Kraftfahrzeugs erfasst wird, der bei auftretenden Fahrbahnunebenheiten sprunghafte Änderungen aufweist, bei dem abhängig von den ermittelten Änderungen des Betriebsparameters zumindest zwischen einer Straßenfahrt und einer Geländefahrt unterschieden wird, und bei dem bei einem erkannten Wechsel des Fahrbahnzustands ein Steuerungsprogramm einer automatisiert steuerbaren Fahrzeugeinrichtung entsprechend angepasst wird. Außerdem ist vorgesehen, dass der betreffende Betriebsparameter in einem vorgegebenen Zeittakt erfasst und hinsichtlich der Höhe seiner sprunghaften Änderung ausgewertet wird, und dass abhängig von der Höhe der sprunghaften Änderung ein Signal für das Vorliegen einer Fahrbahnunebenheit oder für das Nichtvorliegen einer Fahrbahnunebenheit ausgegeben wird, dass die Signale für das Vorliegen und das Nichtvorliegen einer Fahrbahnunebenheit in einem Unebenheits-Zähler gezählt werden, und dass abhängig von dem Zählerstand des Unebenheits-Zählers entschieden wird, ob aktuell eine Straßenfahrt oder eine Geländefahrt vorliegt.

Die Entscheidung über den vorliegenden Fahrbahnzustand erfolgt derart, dass auf eine aktuell vorliegende Geländefahrt entschieden wird, wenn der Zählerstand des Unebenheits-Zählers Z_{UE} einen applizierbaren ersten Entscheidungsgrenzwert Z_{GI} erreicht oder überschritten hat, und dass auf eine aktuell vorliegende Straßenfahrt entschieden wird, wenn der Zählerstand des Unebenheits-Zählers Z_{UE} einen applizierbaren zweiten Entscheidungsgrenzwert Z_{St} erreicht oder unterschritten hat.

Um ein Weglaufen des Zählerstandes des Unebenheitszählers Z_{UE} außerhalb der beiden Entscheidungsgrenzwerte Z_{GI}, Z_{St} und ein damit verbundenes langsames Ansprechverhalten bei der Ermittlung eines Wechsels zwischen einer Straßenfahrt und einer Geländefahrt zu vermeiden, wird gemäß der hier vorliegenden Erfindung der Zählerstand des Unebenheits-Zählers Z_{UE} zweckmäßig nach unten durch einen um einen applizierbaren Zählerabstand unterhalb des zweiten Entscheidungsgrenzwertes Z_{St} liegenden Mindest-Zählerstand Z_{Min} und nach oben durch einen um einen applizierbaren Zählerabstand oberhalb des ersten Entscheidungsgrenzwertes Z_{GI} liegenden Maximal-Zählerstand Z_{Max} begrenzt. Dies bedeutet, dass der Unebenheitszähler Z_{UE} mit Erreichen des Mindest-Zählerstandes Z_{Min} nicht weiter verringert wird, so dass beim nachfolgenden Auftreten von Unebenheiten der erste Entscheidungsgrenzwert Z_{GI} relativ schnell erreicht wird, und dass der Unebenheitszähler Z_{UE} mit Erreichen des Maximal-Zählerstandes Z_{Max} nicht weiter erhöht wird, so dass beim nachfolgenden Nicht-Auftreten von Unebenheiten der zweite Entscheidungsgrenzwert Z_{St} relativ schnell erreicht wird.

Durch die Art der Auswertung des betreffenden Betriebsparameters, insbesondere durch das Zählen von diskreten Signalen für das Vorliegen oder für das Nichtvorliegen einer Fahrbahnunebenheit in einem Unebenheits-Zähler und die Entscheidung über eine vorliegende Straßen- oder Geländefahrt abhängig vom Zählerstand des Unebenheits-Zählers ist das Verfahren gemäß der Erfindung programmtechnisch einfach umsetzbar und benötigt entsprechend wenig Rechner- und Speicherkapazität. Zudem ist das erfindungsgemäße Verfahren durch die Anpassung geeigneter Parameter einfach applizierbar, d.h. an verschiedene Fahrzeugmodelle und Einsatzgebiete anpassbar, welches anhand der nachfolgenden Erläuterungen noch deutlich erkennbar sein wird.

Die Auswertung des betreffenden Betriebsparameters X erfolgt bevorzugt derart, dass ein Differenzwert ΔXₙ des Betriebsparameters Xₙ zu einem Referenzwert X_{Ref} gebildet wird, eine Änderungsdifferenz ΔX_{N} dieses Differenzwertes ΔXₙ zu dem in dem vorhergehenden Zeittakt ermittelten Differenzwert ΔXₙ₋₁ gebildet wird, und der Betrag der Änderungsdifferenz ΔX_{N} mit einem applizierbaren Änderungsgrenzwert ΔX_{Gr} verglichen wird, und dass bei Erreichen oder Überschreiten des Änderungsgrenzwertes ΔX_{Gr} durch die Änderungsdifferenz ΔX_{N} das Signal für das Vorliegen einer Fahrbahnunebenheit S_{UE/+} ausgegeben und bei Nichterreichen des Änderungsgrenzwertes AX_{GR} durch die Änderungsdifferenz ΔX_{N} das Signal für das Nichtvorliegen einer Fahrbahnunebenheit S_{UE/-} ausgegeben wird.

Der Unebenheitszähler Z_{UE} kann als ein absoluter Zähler definiert sein, der pro Zeittakt bei Empfang eines Signals für das Vorliegen einer Fahrbahnunebenheit S_{UE/+} um ein applizierbares Inkrement, vorzugsweise um eins, erhöht und bei Empfang eines Signals für das Nichtvorliegen einer Fahrbahnunebenheit S_{UE/-} um ein applizierbares Dekrement, vorzugsweise um eins, reduziert wird. Dies bedeutet, dass sich der Zählerstand des Unebenheitszählers Z_{UE} nach jedem Zeittakt verändert, bei Empfang eines Signals für das Vorliegen einer Fahrbahnunebenheit S_{UE/+} nach oben und bei Empfang eines Signals für das Nichtvorliegen einer Fahrbahnunebenheit S_{UE/-} nach unten.

Alternativ dazu kann der Unebenheits-Zähler Z_{UE} jedoch auch als ein auf ein Zeitfenster bezogener Zähler definiert sein, der pro Zeittakt bei Empfang eines aktuellen Signals für das Vorliegen einer Fahrbahnunebenheit S_{UE/+} um ein applizierbares Inkrement, vorzugsweise um eins, erhöht und bei Empfang eines aktuellen Signals für das Nichtvorhandensein einer Fahrbahnunebenheit S_{UE/-} konstant gehalten wird, und dass der Unebenheits-Zähler Z_{UE} ausgehend von diesem Zählerstand bei einem im ältesten Zeittakt des Zeitfensters eingegangen Signal für das Vorliegen einer Fahrbahnunebenheit S_{UE/+} um ein Dekrement reduziert und bei einem im ältesten Zeittakt des Zeitfensters eingegangen Signal für das Nichtvorliegen einer Fahrbahnunebenheit S_{UE/-} konstant gehalten wird. Bei dieser Variante verändert sich der Zählerstand des Unebenheitszählers Z_{UE} nur dann nach oben, wenn aktuell ein Signal für das Vorliegen einer Fahrbahnunebenheit S_{UE/+} eingegangen ist und wenn im ersten Zeittakt des Zeitfensters ein Signal für das Nichtvorliegen einer Fahr-bahnunebenheit S_{UE/-} eingegangen war. Umgekehrt kann sich der Zählerstand des Unebenheitszählers Z_{UE} nur dann nach unten verändern, wenn aktuell ein Signal für das Nichtvorliegen einer Fahrbahnunebenheit S_{UE/-} eingegangen ist, und wenn im ersten Zeittakt des Zeitfensters ein Signal für das Vorliegen einer Fahrbahnunebenheit S_{UE/+} eingegangen war.

Da bei Fahrzeugstillstand keine Unebenheiten registriert werden können und bei geringer Fahrgeschwindigkeit, z.B. beim Rangieren, auftretende Unebenheiten keine Rückschlüsse auf den Fahrbahnzustand eines nachfolgend befahrenen Streckenabschnitts zulassen, ist zweckmäßig vorgesehen, dass die aktuelle Fahrgeschwindigkeit v_{F} des Kraftfahrzeugs erfasst wird, und dass der Unebenheits-Zähler Z_{UE} konstant gehalten wird, wenn die aktuelle Fahrgeschwindigkeit v_{F} eine applizierbare Mindestgeschwindigkeit v_{Min} unterschreitet.

Da das Fahren von engen Kurven aufgrund des Ansprechverhaltens des Achsdifferenzials der Antriebsachse und aufgrund des Radierens von Reifen der gelenkten und/oder ungelenkten Räder zu Erschütterungen führen kann, die irrtümlich als Fahrbahnunebenheiten registriert werden könnten, ist vorteilhaft auch vorgesehen, dass der von dem Kraftfahrzeug aktuell gefahrene Kurvenradius R_{K}, z.B. mittels eines Lenkungssensors oder mittels der Drehzahldifferenz der mittels Drehzahlsensoren erfasster Raddrehzahlen einer Fahrzeugachse, erfasst wird, und dass der Unebenheits-Zähler Z_{UE} konstant gehalten wird, wenn der aktuelle Kurvenradius R_{K} einen applizierbaren Mindestradius R_{Min} unterschreitet.

Da bei einer theoretisch möglichen Übereinstimmung beider Entscheidungsgrenzwerte Z_{GI}, Z_{St} und wechselhaftem Fahrbahnzustand unerwünschte Pendelschaltungen zwischen einem Schaltprogramm für Straßenfahrt und einem Schaltprogramm für Geländefahrt verursacht würden, ist der zweite Entscheidungsgrenzwert Z_{St} zur Erzielung eines Hystereseverhaltens bei der Ermittlung eines Wechsels zwischen einer Straßenfahrt und einer Geländefahrt vorteilhaft um einen applizierbaren Zählerabstand unterhalb des ersten Entscheidungsgrenzwertes Z_{GI} festgelegt.

Alternativ zu einer binären Anpassung des Steuerungsprogramms, d.h. einer Umschaltung des Steuerungsprogramms zwischen Straßenfahrt und Geländefahrt, kann auch eine mehrfach abgestufte Anpassung des Steuerungsprogramms an Fahrten in unterschiedlich schwerem Gelände vorgesehen sein. Dies kann unter Beibehaltung der zuvor beschriebenen Entscheidungssystematik dadurch erreicht werden, dass mehrere applizierbare erste Entscheidungsgrenzwerte (Z_{GI_1}, Z_{GI_2}, Z_{GI_3}) und mehrere applizierbare zweite Entscheidungsgrenzwerte (Z_{St_1}, Z_{St_2}, Z_{St_3}) vorgesehen sind, wobei auf eine aktuelle Fahrt in einem schwereren Gelände entschieden wird, wenn der Zählerstand des Unebenheits-Zählers Z_{UE} den nächsthöheren ersten Entscheidungsgrenzwert (Z_{GI_1}, Z_{GI_2}, Z_{GI_3}) erreicht oder überschritten hat, und auf eine aktuelle Fahrt in einem weniger schweren Gelände entschieden wird, wenn der Zählerstand des Unebenheits-Zählers Z_{UE} den nächstniedrigeren zweiten Entscheidungsgrenzwert (Z_{St_1}, Z_{St_2,} Z_{St_3}) erreicht oder unterschritten hat.

Zur Ermittlung des Fahrbahnzustands können die Signale mehrerer Sensoren ausgewertet werden, was dadurch erfolgen kann, dass die Signale für das Vorliegen oder Nichtvorliegen einer Fahrbahnunebenheit S_{UE/+}, S_{UE/-} auf einen gemeinsamen Unebenheits-Zähler Z_{UE} einwirken, d.h. von diesem gezählt werden.

Hierzu ist es möglich, dass der gemeinsame Unebenheits-Zähler Z_{UE} abhängig von dem Signal für das Vorliegen oder Nichtvorliegen einer Fahrbahnunebenheit S_{UE/+}, S_{UE/-} jedes einzelnen Sensors jeweils um ein applizierbares Inkrement erhöht, konstant gehalten, oder um ein applizierbares Dekrement reduziert wird.

Alternativ dazu ist es jedoch auch möglich, dass der gemeinsame Unebenhelts-Zähler Z_{UE} abhängig davon, ob für eine applizierbare Mindestanzahl der Sensoren Signale für das Vorliegen oder Nichtvorliegen einer Fahrbahnunebenheit S_{UE/+}, S_{UE/-} eingegangen sind, um ein applizierbares Inkrement erhöht, konstant gehalten, oder um ein applizierbares Dekrement reduziert wird.

Eine grundsätzlich andere Auswertung der Sensorsignale mehrerer Sensoren zur Ermittlung des Fahrbahnzustands besteht darin, dass deren Signale für das Vorliegen oder Nichtvorliegen einer Fahrbahnunebenheit S_{UE/+}, S_{UE/-} jeweils auf einen separaten Unebenheits-Zähler Z_{UE_I} einwirken, d.h. von diesen gezählt werden, und dass auf eine aktuelle Straßenfahrt oder eine aktuelle Geländefahrt bzw. auf eine Fahrt in schwierigerem oder weniger schwierigem Gelände entschieden wird, wenn die Zählerstände einer applizierbaren Mindestanzahl der Unebenheits-Zähler Z_{UE_I} jeweils den ersten Entscheidungsgrenzwert Z_{GI} bzw. den nächsthöheren ersten Entscheidungsgrenzwert (Z_{GI_1,} Z_{GI_2}, Z_{GI_3}) erreicht oder überschritten haben, oder den zweiten Entscheidungsgrenzwert Z_{St} bzw. den nächstniedrigeren zweiten Entscheidungsgrenzwert (Z_{St_1}, Z_{St_2}, Z_{St_3}) erreicht oder unterschritten haben.

Zur Ermittlung des Fahrbahnzustands können die Signale unterschiedlicher Sensoren, die verschiedene Betriebsparameter des Kraftfahrzeugs erfassen, ausgewertet werden, sofern diese bei auftretenden Fahrbahnunebenheiten jeweils sprunghafte Änderungen aufweisen. Hierbei können sowohl die Signale einheitlicher Sensoren als auch in Kombination die Signale unterschiedlicher Sensoren ausgewertet werden.

Zur Ermittlung des Fahrbahnzustands werden bevorzugt die Signale der Raddrehzahlsensoren n_{R_VL}, n_{R_VR} mindestens einer Fahrzeugachse des Kraftfahrzeugs ausgewertet, wobei für jedes Rad jeweils die Radgeschwindigkeit v_{R_VL}, v_{R_VR} berechnet und ein Differenzwert zu der als Referenzwert verwendeten Fahrgeschwindigkeit v_{F} des Kraftfahrzeugs gebildet wird.

Ebenso kann zur Ermittlung des Fahrbahnzustands zumindest das Signal eines Längsneigungssensors α und/oder eines Querneigungssensors β des Kraftfahrzeugs ausgewertet werden, wobei für jede Neigungsrichtung jeweils ein Differenzwert zu der als Referenzwert verwendeten zeitlich gemittelten Längs- oder Querneigung αₘ, βₘ des Kraftfahrzeugs gebildet wird.

Eine weitere Möglichkeit zur Ermittlung des Fahrbahnzustands besteht darin, dass zumindest das Signal eines Vertikalbeschleunigungssensors a_{V} und/oder eines Längsbeschleunigungssensors a_{L} und/oder eines Querbeschleunigungssensors a_{Q} des Kraftfahrzeugs ausgewertet wird, wobei für jede Beschleunigungsrichtung jeweils ein Differenzwert zu der als Referenzwert verwendeten zeitlich gemittelten Vertikal-, Längs-, oder Querbeschleunigung a_{V_m}, a_{L_m}, a_{Q_m} des Kraftfahrzeugs gebildet wird.

Auch können zur Ermittlung des Fahrbahnzustands die Signale der Federwegsensoren s_{F_VL}, s_{F_VR} der Radaufhängungen mindestens einer Fahrzeugachse des Kraftfahrzeugs ausgewertet werden, wobei für jede Radaufhängung jeweils ein Differenzwert zu dem als Referenzwert verwendeten zeitlich gemittelten Federweg s_{F_VL_m}, s_{F_VR_m} der betreffenden Radaufhängung gebildet wird.

Schließlich kann bei einem mit Achslastsensoren ausgerüsteten Nutzfahrzeug zur Ermittlung des Fahrbahnzustands auch das Signal eines Achslastsensors L_{V}, L_{H} mindestens einer Fahrzeugachse des Kraftfahrzeugs ausgewertet werden, wobei für jede Fahrzeugachse jeweils ein Differenzwert zu der als Referenzwert verwendeten zeitlich gemittelten Achslast L_{V_m}, L_{H_m} der jeweiligen Fahrzeugachse gebildet wird.

Bei einem mit einem gegenüber dem Fahrzeugrahmen federnd gelagerten Fahrerhaus versehenen Nutzfahrzeug kann zur Ermittlung des Fahrbahnzustands auch das Signal eines Federwegsensors s_{K} zumindest einer federnd ausgebildeten Kabinenlagerung des Fahrerhauses ausgewertet werden, wobei ein Differenzwert zu dem als Referenzwert verwendeten zeitlich gemittelten Federweg s_{K_m} der betreffenden Kabinenlagerung gebildet wird.

Zur Verdeutlichung der Erfindung ist der Beschreibung eine Zeichnung mit einem Ausführungsbeispiel beigefügt.

In diesen zeigt
- Fig. 1: ein Ablaufschema des erfindungsgemäßen Verfahrens am Beispiel einer Auswertung von Raddrehzahlsensoren,
- Fig. 2: eine Erläuterung des Signalverlaufs eines Raddrehzahlsensors beim Auftreten einer Unebenheit der Fahrbahn, und
- Fig. 3: die Signalverläufe von zwei Raddrehzahlsensoren einer Fahrzeugachse.

Nachfolgend wird das erfindungsgemäße Verfahren zur Ermittlung des Fahrbahnzustands eines von einem Kraftfahrzeug befahrenen Streckenabschnitts am Beispiel einer Auswertung von Raddrehzahlsensoren näher beschrieben.

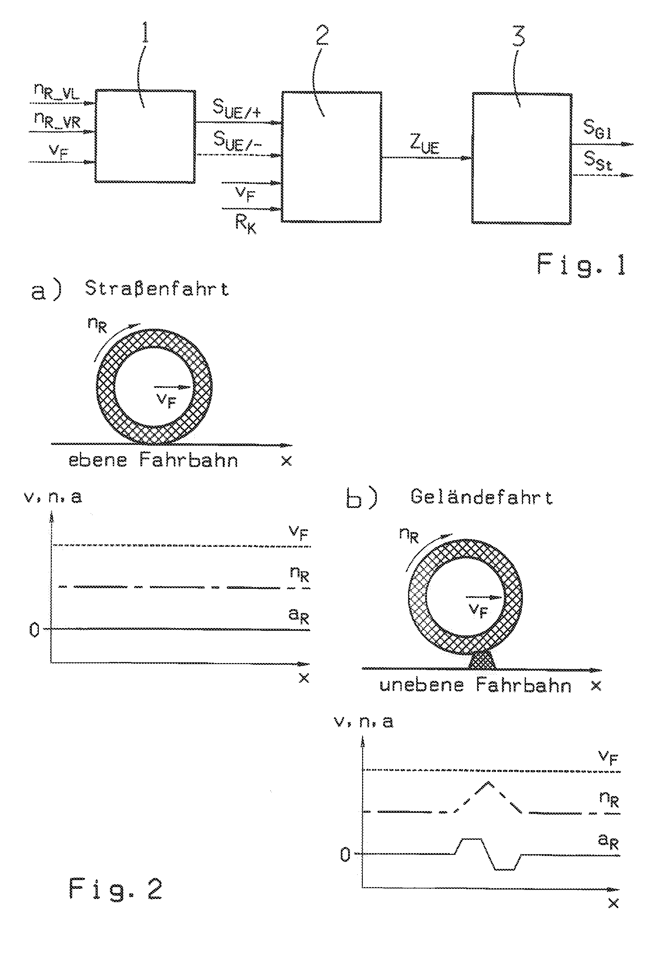

Hierzu ist In Fig. 2 in vereinfachter Form dargestellt, wie sich die von einem Raddrehzahlsensor erfasste Raddrehzahl n_{R} und die daraus ableitbare Radbeschleunigung a_{R} bei einer Straßenfahrt und bei einer Geländefahrt verhält. Ein nicht weiter bezeichnetes Fahrzeugrad ist schematisch und schraffiert dargestellt.

Bei der im Teil a) der Fig. 2 dargestellten Straßenfahrt weist die Fahrbahn keine Unebenheit auf, d.h. die Fahrbahn ist weitgehend eben. Demzufolge tritt bei konstanter Fahrgeschwindigkeit v_{F} des Kraftfahrzeugs keine Schwankung der Raddrehzahl n_{R} und keine Veränderung der Radbeschleunigung a_{R} auf, weshalb die Raddrehzahl n_{R} konstant ist und die Radbeschleunigung a_{R} konstant Null beträgt.

Im Unterschied dazu weist die Fahrbahn bei einer im Teil b) der Fig. 2 dargestellten Geländefahrt größere Unebenheiten auf. Beim Überfahren einer Unebenheit muss das betreffende Rad einen größeren Weg zurücklegen als die übrigen Räder bzw. der Schwerpunkt des Kraftfahrzeugs. Demzufolge treten beim Überfahren der Unebenheit an dem betreffenden Rad bei konstanter Fahrgeschwindigkeit v_{F} ein Anstieg und ein anschließender Abfall der Raddrehzahl n_{R} auf, was zu einer anfänglich positiven und nachfolgend negativen Radbeschleunigung a_{R} führt. Das Auftreten oder Nichtauftreten derartiger Signalsprünge von Raddrehzahlsensoren wird in dem Verfahren gemäß der Erfindung ausgewertet, um eine aktuell vorliegenden Geländefahrt oder Straßenfahrt zu erkennen.

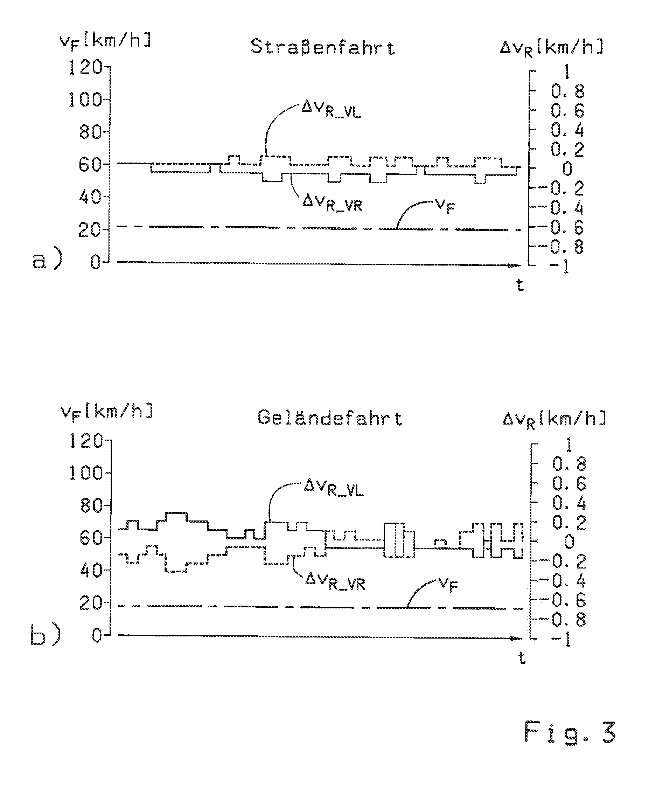

Zum Vergleich sind In den Zeitdiagrammen von Fig. 3 die aus den Drehzahlsignalen n_{R_VL}, n_{R_VR} der beiden Raddrehzahlsensoren einer Vorderachse eines Kraftfahrzeugs abgeleiteten Differenzgeschwindigkeiten Δv_{R}__{VL}, Δv_{R_VR} bei einer Straßenfahrt (Fig. 3a) und bei einer Geländefahrt (Fig. 3b) jeweils mit konstanter Fahrgeschwindigkeit v_{F} abgebildet. Die Differenzgeschwindigkeiten Δv_{R_VL}, Δv_{R_VR} ergeben sich jeweils aus der Differenz (Δv_{R} = v_{R} - v_{F}) zwischen der Radgeschwindigkeit v_{R} und der Fahrgeschwindigkeit v_{F}, wobei die Radgeschwindigkeiten v_{R} in an sich bekannter Weise mit dem effektiven Radradius r_{R} nach der Formel v_{R} = 2 π r_{R} * n_{R} * 3,6 berechnet werden können.

Der schematisch in Fig. 1 abgebildete Verfahrensablauf zur Ermittlung des Fahrbahnzustands ist in drei Funktionsblöcke gegliedert. In dem ersten Funktionsblock 1 werden in einem vorgegeben Zeittakt die Signale der Raddrehzahlsensoren der Vorderachse, d.h. die Drehzahlen n_{R_VL} und n_{R_VR} sowie die aktuelle Fahrgeschwindigkeit v_{F} erfasst und ausgewertet. Die Auswertung erfolgt derart, dass aus den Drehzahlwerten n_{R_VL} und n_{R_VR} in der vorbeschriebenen Weise jeweils eine Differenzgeschwindigkeit Δn_{R_VL} und Δn_{R_VR} gebildet wird. Dann wird für jeden der beiden Sensoren jeweils eine Änderungsdifferenz Δv_{R_N} der Differenzgeschwindigkeit Δv_{R_n} zu der in dem vorhergehenden Zeittakt ermittelten Differenzgeschwindigkeit Δv_{R_n-1} gebildet, und anschließend der Betrag der Änderungsdifferenz Δv_{R_N} mit einem applizierbaren Änderunggrenzwert Δv_{R_Gr} verglichen.

In einer von mehreren möglichen Entscheidungsvarianten kann vorgesehen sein, dass ein Signal für das Vorliegen einer Fahrbahnunebenheit S_{UE/+} ausgegeben wird, wenn für beide Drehzahlsensoren die Änderungsdifferenz Δv_{R_N} jeweils den Änderungsgrenzwert Δv_{R_Gr} erreicht oder überschritten hat, und dass andernfalls ein Signal für das Nichtvorliegen einer Fahrbahnunebenheit S_{UE/-} ausgegeben wird.

In dem zweiten Funktionsblock 2 der Fig. 1 wird ein Unebenheitszähler Z_{UE} in Abhängigkeit von dem Eingang eines Signals für das Vorliegen oder Nichtvorliegen einer Fahrbahnunebenheit S_{UE/+}, S_{UE/-} erhöht oder vermindert, d.h. der Wert des Unebenheitszählers Z_{UE} wird bei Eingang des Signals für das Vorliegen einer Fahrbahnunebenheit S_{UE/+} um eins erhöht und bei Eingang des Signals für das Nichtvodiegen einer Fahrbahnunebenheit S_{UE/-} um eins reduzielt.

Zur Vermeidung einer irrtümlichen oder fehlerhaften Veränderung des Zählerstands des Unebenheitszählers Z_{UE} ist zudem vorgesehen, dass der Unebenheitszähler Z_{UE} in seinem Wert konstant gehalten wird, wenn die aktuelle Fahrgeschwindigkeit v_{F} eine applizierbare Mindestgeschwindigkeit v_{Min} unterschreitet, und wenn der in geeigneter Weise erfasste, aktuell gefahrene Kurvenradius R_{K} einen applizierbaren Mindestradius R_{Min} unterschreitet.

Zur Erzielung eines relativ schnellen Ansprechverhaltens eines Wechsels zwischen einer Straßenfahrt und einer Geländefahrt ist zweckmäßig auch vorgesehen, dass der Zählerstand des Unebenheits-Zälers Z_{UE} nach unten durch einen Mindest-Zählerstand Z_{Min} und nach oben durch einen Maximal-Zählerstand Z_{Max} begrenzt ist, d.h. nicht unter den Mindest-Zählerstand Z_{Min} verringert und nicht über den Maximal-Zählerstand Z_{Max} erhöht wird.

In dem dritten Funktionsblock 3 der Fig. 1 wird abhängig von dem Zählerstand des Unebenheitszählers Z_{UE} entschieden, ob aktuell eine Geländefahrt oder eine Straßenfahrt vorliegt. Dies geschieht dadurch, dass der Zählerstand des Unebenheitszählers Z_{UE} mit einem applizierbaren, also zuvor festgelegten ersten Entscheidungsgrenzwert Z_{GI} und einem applizierbaren zweiten Entscheidungsgrenzwert Z_{St} verglichen wird.

Auf eine aktuell vorliegende Geländefahrt wird dann entschieden und ein entsprechendes Signal S_{GI} dem dritten Funktionsblock 3 ausgegeben, wenn der Zählerstand des Unebenheits-Zählers Z_{UE} den ersten Entscheidungsgrenzwert Z_{GI} erreicht oder überschritten hat. Auf eine aktuell vorliegende Straßenfahrt wird dann entschieden und ein entsprechendes Signal S_{St} ausgegeben, wenn der Zählerstand des Unebenheits-Zählers Z_{UE} den zweiten Entscheidungsgrenzwert Z_{St} erreicht oder unterschritten hat.

Abhängig von dem ausgegebenen Signal S_{GI}, S_{St} können dann die Steuerungsprogramme von automatisiert steuerbaren Fahrzeugeinrichtungen, wie z.B. einer Getriebesteuerung, von Fahrstabilitätssystemen (ABS, ASR, ESP), einer Lenkung mit variabler Übersetzung und/oder Servounterstützung, und einer variablen Fahrwerksdämpfung entsprechend angepasst werden.

Damit hierbei bei häufig wechselndem Fahrbahnzustand keine Pendelschaltungen zwischen den Steuerungsprogrammen für Straßenfahrt und denjenigen für Geländefahrt auftreten, ist der zweite Entscheidungsgrenzwert Z_{St} zur Erzielung eines gewünschten Hystereseverhaltens zweckmäßig um einen applizierbaren Zählerabstand unterhalb des ersten Entscheidungsgrenzwertes Z_{GI} festgelegt.

### Bezugszeichen

- 1: Erster Funktionsblock
- 2: Zweiter Funktionsblock
- 3: Dritter Funktionsblock
- a_{L}: Längsbeschleunigung
- a_{L_m}: Zeitlich gemittelte Längsbeschleunigung
- a_{R}: Radbeschleunigung
- a_{Q}: Querbeschleunigung
- a_{Q_m}: Zeitlich gemittelte Querbeschleunigung
- a_{V}: Vertikalbeschleunigung
- a_{V_m}: Zeitlich gemittelte Vertikalbeschleunigung
- L_{H}: Achslast der Hinterachse
- L_{H_m}: Zeitlich gemittelte Achslast der Hinterachse
- L_{V}: Achslast der Vorderachse
- L_{V_m}: Zeitlich gemittelte Achslast der Vorderachse
- n_{R}: Raddrehzahl
- n_{R_VL}: Raddrehzahl vorne links
- n_{R_VR}: Raddrehzahl vorne rechts
- R_{K}: Kurvenradius
- R_{Min}: Mindestradius
- r_{R}: Radradius
- s_{F}: Federweg einer Radaufhängung
- s_{F_VL}: Federweg der Radaufhängung vorne links
- s_{F_VL_m}: Mittlerer Federweg der Radaufhängung vorne links
- s_{F_VR}: Federweg der Radaufhängung vorne rechts
- s_{F_VR_m}: Mittlerer Federweg der Radaufhängung vorne rechts
- S_{GI}: Signal für das Vorliegen einer Geländefahrt
- s_{K}: Federweg einer Kabinenlagerung
- s_{K_m}: Zeitlich gemiltelter Federweg einer Kabinenlagerung
- S_{St}: Signal für das Vorliegen einer Straßenfahrt
- S_{UE/-}: Signal für das Nichtvorliegen einer Unebenheit
- S_{UE/+}: Signal für das Vorliegen einer Unebenheit
- t: Zeit
- v_{F}: Fahrgeschwindigkeit
- v_{Min}: Mindestgeschwindigkeit
- v_{R}: Radgeschwindigkeit
- v_{R_VL}: Radgeschwindigkeit vorne links
- v_{R_VR}: Radgeschwindigkeit vorne rechts
- X: Betriebsparameter
- Xₙ: Betriebsparameter des aktuellen Zeittaktes
- Yₙ₋₁: Betriebsparameter des vorhergehenden Zeittaktes
- X_{Ref}: Referenzwert
- Z_{GI}: Erster Entscheidungsgrenzwert
- Z_{GI_1}: Erster Entscheidungsgrenzwert
- Z_{GI_2}: Erster Entscheidungsgrenzwert
- Z_{GI_3}: Erster Entscheidungsgrenzwert
- Z_{Max}: Maximal-Zählerstand
- Z_{Min}: Minimal-Zählerstand
- Z_{St}: Zweiter Entscheidungsgrenzwert
- Z_{St_1}: Zweiter Entscheidungsgrenzwert
- Z_{St}_₂: Zweiter Entscheidungsgrenzwert
- Z_{St_3}: Zweiter Entscheidungsgrenzwert
- Z_{UE}: Unebenheitszähler
- Z_{UE_i}: Unebenheitszähler
- α: Längsneigung
- αₘ: zeitlich gemittelte Längsneigung
- β: Querneigung
- βₘ: Zeitlich gemittelte Querneigung
- Δv_{R}: Differenzgeschwindigkeit
- ΔV_{R_Gr}: Änderungsgrenzwert
- ΔV_{R_N}: Änderungsdifferenz
- Δv_{R}__{VL}: Differenzgeschwindigkeit vorne links
- Δv_{R_VR}: Differenzgeschwindigkeit vorne rechts
- ΔX_{Gr}: Änderungsgrenzwert
- ΔXₙ: Differenzwert des aktuellen Zeittaktes
- ΔX_{N}: Änderungsdifferenz
- ΔXₙ₋₁: Differenzwert des vorhergehenden Zeittaktes

## Patentansprüche

1. Verfahren zur Ermittlung des Fahrbahnzustands eines von einem Kraftfahrzeug befahrenen Streckenabschnitts, bei dem mittels mindestens eines Sensors ein Betriebsparameter des Kraftfahrzeugs erfasst wird, der bei auftretenden Fahrbahnunebenheiten sprunghafte Änderungen aufweist, bei dem abhängig von den ermittelten Änderungen des Betriebsparameters zumindest zwischen einer Straßenfahrt und einer Geländefahrt unterschieden wird, und bei dem bei einem erkannten Wechsel des Fahrbahnzustands ein Steuerungsprogramm einer automatisiert steuerbaren Fahrzeugeinrichtung entsprechend angepasst wird, wobei der betreffende Betriebsparameter (X) in einem vorgegebenen Zeittakt erfasst und hinsichtlich der Höhe seiner sprunghaften Änderung ausgewertet wird, wobei abhängig von der Höhe der sprunghaften Änderung ein Signal für das Vorliegen einer Fahrbahnunebenheit (S_{UE/+}) oder für das Nichtvorliegen einer Fahrbahnunebenheit (S_{UE/-}) ausgegeben wird, wobei die Signale für das Vorliegen und das Nichtvorliegen einer Fahrbahnunebenheit (S_{UE/+}, S_{UE/-}) in einem Unebenheits-Zähler (Z_{UE}) gezählt werden, und wobei abhängig von dem Zählerstand des Unebenheits-Zählers (Z_{UE}) entschieden wird, ob aktuell eine Straßenfahrt oder eine Geländefahrt vorliegt, wobei auf eine aktuell vorliegende Geländefahrt entschieden wird, wenn der Zählerstand des Unebenheits-Zählers (Z_{UE}) einen applizierbaren ersten Entscheidungsgrenzwert (Z_{GI}) erreicht oder überschritten hat, und wobei auf eine aktuell vorliegende Straßenfahrt entschieden wird, wenn der Zählerstand des Unebenheits-Zählers (Z_{UE}) einen applizierbaren zweiten Entscheidungsgrenzwert (Z_{St}) erreicht oder unterschritten hat, **dadurch gekennzeichnet, dass** zur Erzielung eines hinreichend schnellen Ansprechverhaltens bei der Ermittlung eines Wechsels zwischen einer Straßenfahrt und einer Geländefahrt der Zählerstand des Unebenheits-Zählers (Z_{UE}) nach unten durch einen um einen applizierbaren Zählerabstand unterhalb des zweiten Entscheidungsgrenzwertes (Z_{St}) liegenden Mindest-Zählerstand (Z_{Min}) und nach oben durch einen um einen applizierbaren Zählerabstand oberhalb des ersten Entscheidungsgrenzwertes (Z_{GI}) liegenden Maximal-Zählerstand (Z_{Max}) begrenzt wird.

2. Verfahren nach Anspruch 1, **dadurch gekennzeichnet, dass** im Rahmen der Auswertung des betreffenden Betriebsparameters (X) ein Differenzwert (ΔXₙ) des Betriebsparameters (Xₙ) zu einem Referenzwert (X_{Ref}) gebildet wird, eine Änderungsdifferenz (ΔX_{N}) dieses Differenzwertes (ΔXₙ) zu dem in dem vorhergehenden Zeittakt ermittelten Differenzwert (ΔXₙ₋₁) gebildet wird, und der Betrag der Änderungsdifferenz (ΔX_{N}) mit einem applizierbaren Änderungsgrenzwert (ΔX_{Gr}) verglichen wird, und dass bei Erreichen oder Überschreiten des Änderungsgrenzwertes (ΔX_{Gr}) durch die Änderungsdifferenz (ΔX_{N}) das Signal für das Vorliegen einer Fahrbahnunebenheit (S_{UE/+}) ausgegeben und bei Nichterreichen des Änderungsgrenzwertes (ΔX_{Gr}) durch die Änderungsdifferenz (ΔX_{N}) das Signal für das Nichtvorliegen einer Fahrbahnunebenheit (S_{UE/-}) ausgegeben wird.

3. Verfahren nach Anspruch 1 oder 2, **dadurch gekennzeichnet, dass** der Unebenheits-Zähler (Z_{UE}) als ein absoluter Zähler definiert ist, der pro Zeittakt bei Empfang eines Signals für das Vorliegen einer Fahrbahnunebenheit (S_{UE/+}) um ein applizierbares Inkrement, vorzugsweise um eins, erhöht und bei Empfang eines Signals für das Nichtvorliegen einer Fahrbahnunebenheit (S_{UE/-}) um ein applizierbares Dekrement, vorzugsweise um eins, reduziert wird.

4. Verfahren nach Anspruch 1 oder 2, **dadurch gekennzeichnet, dass** der Unebenheits-Zähler (Z_{UE}) als ein auf ein Zeitfenster bezogener Zähler definiert ist, der pro Zeittakt bei Empfang eines aktuellen Signals für das Vorliegen einer Fahrbahnunebenheit (S_{UE/+}) um ein applizierbares Inkrement, vorzugsweise um eins, erhöht und bei Empfang eines aktuellen Signals für das Nichtvorhandensein einer Fahrbahnunebenheit (S_{UE/-}) konstant gehalten wird, und dass der Unebenheits-Zähler (Z_{UE}) ausgehend von diesem Zählerstand bei einem im ältesten Zeittakt des Zeitfensters eingegangen Signal für das Vorliegen einer Fahrbahnunebenheit (S_{UE/+}) um ein Dekrement reduziert und bei einem im ältesten Zeittakt des Zeitfensters eingegangen Signal für das Nichtvorliegen einer Fahrbahnunebenheit (S_{UE/}-) konstant gehalten wird.

5. Verfahren nach Anspruch 1, **dadurch gekennzeichnet, dass** zur Erzielung eines Hystereseverhaltens bei der Ermittlung eines Wechsels zwischen einer Straßenfahrt und einer Geländefahrt der zweite Entscheidungsgrenzwert (Z_{St}) um einen applizierbaren Zählerabstand unterhalb des ersten Entscheidungsgrenzwertes (Z_{GI}) festgelegt ist.

6. Verfahren nach Anspruch 1 oder 5, **dadurch gekennzeichnet, dass** eine mehrfach abgestufte Anpassung des Steuerungsprogramms an Fahrten in unterschiedlich schwerem Gelände dadurch erreicht wird, dass mehrere applizierbare erste Entscheidungsgrenzwerte (Z_{GI_1}, Z_{GI}_₂, Z_{GI_3}) und mehrere applizierbare zweite Entscheidungsgrenzwerte (Z_{St_1}, Z_{St_2}, Z_{St}_₃) vorgesehen sind, wobei auf eine aktuelle Fahrt in einem schwereren Gelände entschieden wird, wenn der Zählerstand des Unebenheits-Zählers (Z_{UE}) den nächsthöheren ersten Entscheidungsgrenzwert (Z_{GI_1}, Z_{GI_2}, Z_{GI_3}) erreicht oder überschritten hat, und auf eine aktuelle Fahrt in einem weniger schweren Gelände entschieden wird, wenn der Zählerstand des Unebenheits-Zählers (Z_{UE}) den nächstniedrigeren zweiten Entscheidungsgrenzwert (Z_{St_1}, Z_{St_2}, Z_{St}_₃) erreicht oder unterschritten hat.

7. Verfahren nach einem der Ansprüche 1 bis 6, **dadurch gekennzeichnet, dass** zur Ermittlung des Fahrbahnzustands die Signale mehrerer Sensoren ausgewertet werden, wobei die Signale für das Vorliegen oder Nichtvorliegen einer Fahrbahnunebenheit (S_{UE/+} S_{UE/-}) auf einen gemeinsamen Unebenheits-Zähler (Z_{UE}) einwirken.

8. Verfahren nach Anspruch 7, **dadurch gekennzeichnet, dass** der gemeinsame Unebenheits-Zähler (Z_{UE}) abhängig von dem Signal für das Vorliegen oder Nichtvorliegen einer Fahrbahnunebenheit (S_{UE/+}, S_{UE/-}) jedes einzelnen Sensors jeweils um ein applizierbares Inkrement erhöht, konstant gehalten, oder um ein applizierbares Dekrement reduziert wird, bzw. dass der gemeinsame Unebenheits-Zähler (Z_{UE}) abhängig davon, ob für eine applizierbare Mindestanzahl der Sensoren Signale für das Vorliegen oder Nichtvorliegen einer Fahrbahnunebenheit (S_{UE/+}, S_{UE/-}) eingegangen sind, um ein applizierbares Inkrement erhöht, konstant gehalten, oder um ein applizierbares Dekrement reduziert wird.

9. Verfahren nach einem der Ansprüche 1 bis 6, **dadurch gekennzeichnet, dass** zur Ermittlung des Fahrbahnzustands die Signale mehrerer Sensoren ausgewertet werden, wobei die Signale für das Vorliegen oder Nichtvorliegen einer Fahrbahnunebenheit (S_{UE/+}, S_{UE/-}) jeweils auf einen separaten Unebenheits-Zähler (Z_{UE_i}) einwirken, und wobei auf eine aktuelle Straßenfahrt oder eine aktuelle Geländefahrt bzw. auf eine Fahrt in schwierigerem oder weniger schwierigem Gelände entschieden wird, wenn die Zählerstände einer applizierbaren Mindestanzahl der Unebenheits-Zähler (Z_{UE_i}) jeweils den ersten Entscheidungsgrenzwert (Z_{GI}) bzw. den nächsthöheren ersten Entscheidungsgrenzwert (Z_{GI_1}, Z_{GI_2}, Z_{GI_3}) erreicht oder überschritten haben oder den zweiten Entscheidungsgrenzwert (Z_{St}) bzw. den nächstniedrigeren zweiten Entscheidungsgrenzwert (Z_{St_1}, Z_{St_2}, Z_{St}_₃) erreicht oder unterschritten haben.

10. Verfahren nach wenigstens einem der Ansprüche 1 bis 9, **dadurch gekennzeichnet, dass** zur Ermittlung des Fahrbahnzustands die Signale der Raddrehzahlsensoren (n_{R}__{VL}, n_{R_VR}) mindestens einer Fahrzeugachse des Kraftfahrzeugs ausgewertet werden, wobei für jedes Rad jeweils die Radgeschwindigkeit (v_{R_VL}, v_{R_VR}) berechnet und ein Differenzwert zu der als Referenzwert verwendeten Fahrgeschwindigkeit (v_{F}) des Kraftfahrzeugs gebildet wird.

11. Verfahren nach wenigstens einem der Ansprüche 1 bis 10, **dadurch gekennzeichnet, dass** zur Ermittlung des Fahrbahnzustands zumindest das Signal eines Längsneigungssensors (α) und/oder eines Querneigungssensors (β) des Kraftfahrzeugs ausgewertet wird, wobei für jede Neigungsrichtung jeweils ein Differenzwert zu der als Referenzwert verwendeten zeitlich gemittelten Längs- oder Querneigung (αₘ, βₘ) des Kraftfahrzeugs gebildet wird.

12. Verfahren nach wenigstens einem der Ansprüche 1 bis 11, **dadurch gekennzeichnet, dass** zur Ermittlung des Fahrbahnzustands zumindest das Signal eines Vertikalbeschleunigungssensors (a_{V}) und/oder eines Längsbeschleunigungssensors (a_{L}) und/oder eines Querbeschleunigungssensors (a_{Q}) des Kraftfahrzeugs ausgewertet wird, wobei für jede Beschleunigungsrichtung jeweils ein Differenzwert zu der als Referenzwert verwendeten zeitlich gemittelten Vertikal-, Längs-, oder Querbeschleunigung (a_{V_m}, a_{L_m}, a_{Q_m}) des Kraftfahrzeugs gebildet wird.

13. Verfahren nach wenigstens einem der Ansprüche 1 bis 12, **dadurch gekennzeichnet, dass** zur Ermittlung des Fahrbahnzustands die Signale der Federwegsensoren (s_{F_VL}, s_{F_VR}) der Radaufhängungen mindestens einer Fahrzeugachse des Kraftfahrzeugs ausgewertet werden, wobei für jede Radaufhängung jeweils ein Differenzwert zu dem als Referenzwert verwendeten zeitlich gemittelten Federweg (s_{F_VL_m}, s_{F_VR_m}) der betreffenden Radaufhängung gebildet wird.

14. Verfahren nach wenigstens einem der Ansprüche 1 bis 13, **dadurch gekennzeichnet, dass** zur Ermittlung des Fahrbahnzustands das Signal eines Achslastsensors (L_{V}, L_{H}) mindestens einer Fahrzeugachse des Kraftfahrzeugs ausgewertet wird, wobei für jede Fahrzeugachse jeweils ein Differenzwert zu der als Referenzwert verwendeten zeitlich gemittelten Achslast (L_{V_m}, L_{H_m}) der jeweiligen Fahrzeugachse gebildet wird.

15. Verfahren nach wenigstens einem der Ansprüche 1 bis 14, **dadurch gekennzeichnet, dass** zur Ermittlung des Fahrbahnzustands das Signal eines Federwegsensors (s_{K}) zumindest einer federnd ausgebildeten Kabinenlagerung des Fahrerhauses ausgewertet wird, wobei ein Differenzwert zu dem als Referenzwert verwendeten zeitlich gemittelten Federweg (s_{K_m}) der betreffenden Kabinenlagerung gebildet wird.

## Claims

1. Method for determining the state of the underlying surface of a section of road driven on by a motor vehicle, in which an operating parameter of the motor vehicle, which experiences sudden changes in the case of unevenness of the underlying surface, is detected by means of at least one sensor, in which a differentiation is made at least between on-road and off-road travel as a function of the determined changes in the operating parameter, and in which when a changeover of the state of the underlying surface is detected, a control program of a vehicle device which can be controlled in an automated fashion is correspondingly adapted, wherein the respective operating parameter (X) is detected in a predefined clock cycle and is evaluated with respect to the magnitude of its sudden change, wherein a signal relating to the presence of unevenness of the underlying surface (S_{UE/+}) or to the absence of unevenness of the underlying surface (S_{UE/-}) is output as a function of the magnitude of the sudden change, wherein the signals relating to the presence and the absence of unevenness of the underlying surface (S_{UE/+}, S_{UE/-}) are counted in an unevenness counter (Z_{UE}), and wherein as a function of the counter reading of the unevenness counter (Z_{UE}) it is decided whether on-road or off-road travel is occurring at the current time, wherein it is decided that off-road travel is occurring at the current time if the counter reading of the unevenness counter (Z_{UE}) has reached or exceeded an applicable first decision limiting value (Z_{GI}) and wherein it is decided that on-road travel is occurring at the current time if the counter reading of the unevenness counter (Z_{UE}) has reached or undershot an applicable second decision limiting value (Z_{St}), **characterized in that**, in order to achieve a sufficiently fast response behaviour when determining a changeover between on-road travel and off-road travel, the counter reading of the unevenness counter (Z_{UE}) is limited in the downward direction by a minimum counter reading (Z_{Min}) which is below the second decision limiting value (Z_{St}) by an applicable counter reading interval, and in the upward direction by a maximum counter reading (Z_{Max}) which is above the first decision limiting value (Z_{GI}) by an applicable counter reading interval.

2. Method according to Claim 1, **characterized in that** within the scope of the evaluation of the respective operating parameter (x) a difference value (ΔXₙ) of the operating parameter (Xₙ) with respect to a reference value (X_{Ref}) is formed, a difference in the change (ΔX_{N}) of this difference value (ΔXₙ) with respect to the difference value (ΔXₙ₋₁) determined in the preceding clock cycle is formed, and the absolute value of the difference in change (ΔX_{N}) is compared with an applicable change limiting value (ΔX_{Gr}), and **in that** when the change limiting value (ΔX_{Gr}) is reached or exceeded by the difference in change (ΔX_{N}) the signal relating to the presence of unevenness of the underlying surface (S_{UE/+}) is output, and when the change limiting value (ΔX_{Gr}) is not reached by the difference in change (ΔX_{N}) the signal relating to the absence of unevenness of the underlying surface (S_{UE/-}) is output.

3. Method according to Claim 1 or 2, **characterized in that** the unevenness counter (Z_{UE}) is defined as an absolute counter which increases by an applicable increment, preferably by one, per clock cycle when a signal relating to the presence of unevenness of the underlying surface (S_{UE/+}) is received, and is reduced by an applicable decrement, preferably by one, when a signal relating to the absence of unevenness of the underlying surface (S_{UE/-}) is received.

4. Method according to Claim 1 or 2, **characterized in that** the unevenness counter (Z_{UE}) is defined as a counter which is related to a time window and which increases by an applicable increment, preferably by one, per clock cycle when a current signal relating to the presence of unevenness of the underlying surface (S_{UE/+}) is received, and is kept constant when a current signal relating to the absence of unevenness of the underlying surface (S_{UE/-}) is received, and **in that** the unevenness counter (Z_{UE}) is reduced from this counter reading by a decrement when a signal relating to the presence of unevenness of the underlying surface (S_{UE/+}) has been input in the latest clock cycle of the time window, and is kept constant when a signal relating to the absence of unevenness of the underlying surface (S_{UE/-}) has been input in the latest clock cycle of the time window.

5. Method according to Claim 1, **characterized in that**, in order to achieve a hysteresis behaviour when a change between on-road travel and off-road travel is determined, the second decision limiting value (Z_{St}) is fixed below the first decision limiting value (Z_{GI}) by an applicable counter reading interval.

6. Method according to Claim 1 or 5, **characterized in that** multiply stepped adaptation of the control program to difficult off-road travel of differing degrees of severity is achieved by virtue of the fact that a plurality of applicable first decision limiting values (Z_{GI_1}, Z_{GI_2}, Z_{GI_3}) and a plurality of applicable second decision limiting values (Z_{St_1}, Z_{St_2}, Z_{St_3}) are provided, wherein it is decided that difficult off-road travel is currently occurring if the counter reading of the unevenness counter (Z_{UE}) has reached or exceeded the next highest first decision limiting value (Z_{GI_1}, Z_{GI_2}, Z_{GI_3}), and it is decided that less difficult off-road travel is currently occurring if the counter reading of the unevenness counter (Z_{UE}) has reached or undershot the next lowest second decision limiting value (Z_{St_1}, Z_{St_2} Z_{St_3}).

7. Method according to one of Claims 1 to 6, **characterized in that** in order to determine the state of the underlying surface the signals of a plurality of sensors are evaluated, wherein the signals relating to the presence or absence of unevenness of the underlying surface (S_{UE/+}, S_{UE/-}) act on a common unevenness counter (Z_{UE}).

8. Method according to Claim 7, **characterized in that** the common unevenness counter (Z_{UE}) is respectively increased by an applicable increment, kept constant or reduced by an applicable decrement as a function of the signal relating to the presence or absence of unevenness of the underlying surface (S_{UE/+}, S_{UE/-}) of each individual sensor, and **in that** the common unevenness counter (Z_{UE}) is increased by an applicable increment, kept constant or reduced by an applicable decrement as a function of whether signals relating to the presence or absence of unevenness of the underlying surface (S_{UE/+}, S_{UE/-}) are input for an applicable minimum number of the sensors.

9. Method according to one of Claims 1 to 6, **characterized in that**, in order to determine the state of the underlying surface, the signals of a plurality of sensors are evaluated, wherein the signals relating to the presence or absence of unevenness of the underlying surface (S_{UE/+}, S_{UE/-}) each act on a separate unevenness counter (Z_{UE_i}), and wherein it is decided that on-road travel is currently occurring or off-road travel is currently occurring or relatively difficult or less difficult off-road travel is occurring if the counter readings of an applicable minimum number of the unevenness counters (Z_{UE_I}) have respectively reached or exceeded the first decision limiting value (Z_{GI}) or the next highest first decision limiting value (Z_{GI_1}, Z_{GI_2}, Z_{GI_3}) or have reached or undershot the second decision limiting value (Z_{St}) or the next lowest second decision limiting value (Z_{St_1}, Z_{St_2}, Z_{St_3}).

10. Method according to at least one of Claims 1 to 9, **characterized in that**, in order to determine the state of the underlying surface, the signals of the wheel rotational speed sensors (n_{R_VL}, n_{R_VR}) of at least one vehicle axle of the motor vehicle are evaluated, wherein the wheel speed (v_{R_VL}, v_{R_VR}) is respectively calculated for each wheel and a difference value with respect to the velocity (v_{F}) of the motor vehicle which is used as a reference value is formed.

11. Method according to at least one of Claims 1 to 10, **characterized in that**, in order to determine the state of the underlying surface, at least the signal of a longitudinal inclination sensor (α) and/or of a lateral inclination sensor (β) of the motor vehicle is used, wherein a difference value with respect to the longitudinal inclination (αₘ) or lateral inclination (βₘ) of the motor vehicle which is averaged over time and which is used as the reference value is respectively formed for each direction of inclination.

12. Method according to at least one of Claims 1 to 11, **characterized in that**, in order to determine the state of the underlying surface, at least the signal of a vertical acceleration sensor (aᵥ) and/or of a longitudinal acceleration sensor (a_{L}) and/or of a lateral acceleration sensor (a_{Q}) of the motor vehicle is evaluated, wherein a difference value with respect to the vertical acceleration (a_{V_m}), longitudinal acceleration (a_{L_m}) or lateral acceleration (a_{Q_m}) of the motor vehicle which is averaged over time and which is used as the reference value is respectively formed for each direction of inclination.

13. Method according to at least one of Claims 1 to 12, **characterized in that**, in order to determine the state of the underlying surface, the signals of the spring travel sensors (S_{F_VL}, S_{F_VR}) of the wheel suspensions of at least one vehicle axle of the motor vehicle are evaluated, wherein, for each wheel suspension, in each case a difference value with respect to the spring travel (S_{F_VL_m}, S_{F_VR_m}), which is averaged over time and used as the reference value, of the respective wheel suspension is formed.

14. Method according to at least one of Claims 1 to 13, **characterized in that**, in order to determine the state of the underlying surface, the signal of an axle load sensor (L_{V}, L_{H}) of at least one vehicle axle of the motor vehicle is evaluated, wherein for each vehicle axle in each case a difference value with respect to the axle load (L_{v_m}, L_{H_m}), which is averaged over time and used as the reference value, of the respective vehicle axle is formed.

15. Method according to at least one of Claims 1 to 14, **characterized in that**, in order to determine the state of the underlying surface, the signal of a spring travel sensor (s_{K}) of at least one cab bearing system, of sprung design, of the driver's cab is evaluated, wherein a difference value with respect to the spring travel (s_{K_m}), which is averaged over time and used as the reference value, of the respective cab bearing system is formed.

## Revendications

1. Procédé de détermination de l'état de la chaussée d'un tronçon de chaussée parcouru par un véhicule automobile, dans lequel au moyen d'au moins un capteur un paramètre opérationnel du véhicule est détecté, qui présente des variations brusques en présence d'inégalités de la chaussée, dans lequel en fonction des variations déterminées du paramètre opérationnel il est fait une distinction au moins entre une circulation sur route et une circulation en tout-terrain, et dans lequel quand un changement de l'état de la chaussée est reconnu, un programme de commande d'un dispositif de véhicule automobile pouvant être commandé de manière automatisée est adapté de manière correspondante, moyennant quoi le paramètre opérationnel concerné (X) est détecté dans une synchronisation temporelle prescrite et est évalué en ce qui concerne la hauteur de sa variation brusque, en fonction de la hauteur de la variation brusque un signal de présence d'une inégalité de la chaussée (S_{m/+}) ou d'absence d'une inégalité de la chaussée (S_{UE/-}) est émis, les signaux de présence et d'absence d'une inégalité de la chaussée (S_{UE/+}, S_{UE/-}) sont comptés dans un compteur d'inégalités (Z_{UE}), et en fonction de l'état de comptage du compteur d'inégalités (Z_{UE}) il est décidé si actuellement une circulation sur route ou une circulation en tout-terrain est présente, moyennant quoi il est décidé qu'une circulation en tout-terrain est actuellement présente quand l'état de comptage du compteur d'inégalités (Z_{UE}) a atteint ou dépassé une première valeur limite de décision applicable (Z_{GI}), et il est décidé qu'une circulation sur route est actuellement présente quand l'état de comptage du compteur d'inégalités (Z_{UE}) a atteint ou sous-dépassé une deuxième valeur limite de décision (Z_{St}) applicable, **caractérisé en ce qu'**afin d'obtenir une réactivité suffisamment rapide lors de la détermination d'un changement entre une circulation sur route et une circulation en tout-terrain, l'état de comptage du compteur d'inégalités (Z_{UE}) est limité vers le bas par un état de comptage minimal (2_{Min}) situé au-dessous de la deuxième valeur limite de décision (Z_{St}) par un écart de comptage applicable et vers le haut par un état de comptage maximal (Z_{Max}) situé au-dessus de la première valeur limite de décision (Z_{GI}) par un écart de comptage applicable.

2. Procédé selon la revendication 1, **caractérisé en ce que** dans le cadre de l'évaluation du paramètre opérationnel concerné (X) une valeur de différence (ΔXₙ) du paramètre opérationnel (Xₙ) est formée en une valeur de référence (X_{Ref}), une différence de variation (ΔX_{N}) de cette valeur de différence (ΔXₙ) est formée par rapport à la valeur de différence (ΔXₙ₋₁) déterminée dans la synchronisation temporelle précédente, et la valeur de la différence de variation (ΔX_{N}) est comparée avec une valeur limite de variation applicable (ΔX_{Gr}), et **en ce que** quand la valeur limite de variation (ΔX_{Gr}) est atteinte ou dépassée par la différence de variation (ΔX_{N}), le signal de présence d'une inégalité de la chaussée (S_{UE/+}) est émis et quand la valeur limite de variation (ΔX_{Gr}) n'est pas atteinte par la différence de variation (ΔX_{N}) le signal d'absence d'une inégalité de la chaussée (S_{UE/-}) est émis.

3. Procédé selon la revendication 1 ou 2, **caractérisé en ce que** le compteur d'inégalités (Z_{UE}) est défini comme un compteur absolu qui, pour chaque synchronisation temporelle lors de la réception d'un signal de présence d'une inégalité de la chaussée (S_{UE/+}), est augmenté d'un incrément applicable, de préférence de un, et lors de la réception d'un signal d'absence d'une inégalité de la chaussée (S_{UE/-}) est réduit d'un décrément applicable, de préférence de un.

4. Procédé selon la revendication 1 ou 2, **caractérisé en ce que** le compteur d'inégalités (Z_{UE}) est défini comme un compteur rapporté à une fenêtre temporelle qui, pour chaque synchronisation temporelle lors de la réception d'un signal actuel de présence d'une inégalité de la chaussée (S_{UE/+}), augmente d'un incrément applicable, de préférence de un, et lors de la réception d'un signal actuel d'absence d'une inégalité de la chaussée (S_{UE/-}) est maintenu constant, et **en ce que** le compteur d'inégalités (Z_{UE}) à partir de cet état de comptage sur un signal, entré dans la synchronisation temporelle la plus ancienne de la fenêtre temporelle, de présence d'une inégalité de chaussée (S_{UE/+}) est réduit d'un décrément et sur un signal, entré dans la synchronisation temporelle la plus ancienne de la fenêtre temporelle, d'absence d'une inégalité de la chaussée (S_{UE/}-) est maintenu constant.

5. Procédé selon la revendication 1, **caractérisé en ce que** pour obtenir un comportement d'hystérésis lors de la détermination d'un changement entre une circulation sur route et une circulation en tout-terrain, la deuxième valeur limite de décision (Z_{St}) est fixée au-dessous de la première valeur limite de décision (Z_{GI}) d'un écart de comptage applicable.

6. Procédé selon la revendication 1 ou 5, **caractérisé en ce qu'**une adaptation en plusieurs échelons du programme de commande aux conduites sur des terrains de difficultés différentes est obtenue, **en ce que** plusieurs premières valeurs limites de décision applicables (Z_{GI_1}, Z_{GI_2}, Z_{GI_3}) et plusieurs deuxièmes valeurs limites de décision applicables (Z_{St_1}, Z_{St_2}, Z_{St_3}) sont prévues, moyennant quoi il est décidé qu'une conduite actuelle dans un terrain difficile est présente quand l'état de comptage du compteur d'inégalités (Z_{UE}) a atteint ou dépassé la première valeur limite de décision plus haute suivante (Z_{GI_1}, Z_{GI_2}, Z_{GI_3}), et il est décidé qu'une conduite actuelle dans un terrain moins difficile est présente quand l'état de comptage du compteur d'inégalités (Z_{UE}) a atteint ou sous-dépassé la deuxième valeur limite de décision plus basse suivante (Z_{St_1}, Z_{St_2}, Z_{St_3}).

7. Procédé selon une des revendications 1 à 6, **caractérisé en ce qu'**en vue de la détermination de l'état de la chaussée, les signaux de plusieurs capteurs sont évalués, les signaux de présence ou d'absence d'une inégalité de la chaussée (S_{UE/+}, S_{UE/-}) agissant sur un compteur d'inégalités commun (Z_{UE}).

8. Procédé selon la revendication 7, **caractérisé en ce que** le compteur d'inégalités commun (Z_{UE}) est, en fonction du signal de présence ou d'absence d'une inégalité de la chaussée (S_{UE/+}, S_{UE/-}) de chaque capteur individuel, respectivement augmenté d'un incrément applicable, maintenu constant ou réduit d'un décrément applicable, ou **en ce que** le compteur d'inégalités commun (Z_{UE}), en fonction de ce que pour un nombre minimal applicable de capteurs des signaux de présence ou d'absence d'une inégalité de la chaussée (S_{UE/+}, S_{UE/-}) sont entrés, est augmenté d'un incrément applicable, maintenu constant ou réduit d'un décrément applicable.

9. Procédé selon une des revendications 1 à 6, **caractérisé en ce qu'**en vue de la détermination de l'état de la chaussée, les signaux de plusieurs capteurs sont évalués, moyennant quoi les signaux de présence ou d'absence d'une inégalité de la chaussée (S_{UE/+}, S_{UE/-}) agissent respectivement sur un compteur d'inégalités séparé (Z_{UE_i}), et moyennant quoi il est décidé qu'une circulation sur route actuelle ou qu'une circulation en tout-terrain actuelle ou qu'une circulation dans des terrains plus difficiles ou moins difficiles est présente quand les états de comptage d'un nombre minimal applicable de compteurs d'inégalités (Z_{UE_i}) ont atteint ou dépassé la première valeur limite de décision (Z_{GI}) ou la première valeur limite de décision plus haute suivante (Z_{GI_1}, Z_{GI_2}, Z_{GI_3}) ou ont atteint ou sous-dépassé la deuxième valeur limite de décision (Z_{St}) ou la deuxième valeur limite de décision plus basse suivante (Z_{St_1}, Z_{St_2}, Z_{St_3}).

10. Procédé selon au moins une des revendications 1 à 9, **caractérisé en ce qu'**en vue de la détermination de l'état de la chaussée les signaux des capteurs de vitesse de rotation des roues (n_{R_VL}, n_{R_VR}) d'au moins un essieu du véhicule automobile sont évalués, moyennant quoi pour chaque roue la vitesse de roue respective (V_{R_VL}, V_{R_VR}) est calculée et une valeur de différence par rapport à la vitesse de conduite (V_{F}) du véhicule automobile utilisée comme valeur de référence est formée.

11. Procédé selon au moins une des revendications 1 à 10, **caractérisé en ce qu'**en vue de la détermination de l'état de la chaussée, au moins le signal d'un capteur d'inclinaison longitudinale (α) et/ou d'un capteur d'inclinaison transversale (β) du véhicule automobile est évalué, moyennant quoi pour chaque direction d'inclinaison une valeur de différence respective est formée par rapport à l'inclinaison longitudinale ou transversale (αₘ, βₘ) du véhicule automobile, calculée en moyenne temporelle et utilisée comme valeur de référence.

12. Procédé selon au moins une des revendications 1 à 11, **caractérisé en ce qu'**en vue de la détermination de l'état de la chaussée, au moins le signal d'un capteur d'accélération verticale (aᵥ) et/ou d'un capteur d'accélération longitudinale (a_{L}) et/ou d'un capteur d'accélération transversale (a_{Q}) du véhicule automobile est évalué, moyennant quoi pour chaque direction d'accélération une valeur de différence respective est formée par rapport à l'accélération verticale, longitudinale ou transversale (a_{v_m}, a_{L_m}, a_{Q_m}) du véhicule automobile, calculée en moyenne temporelle et utilisée comme valeur de référence.

13. Procédé selon au moins une des revendications 1 à 12, **caractérisé en ce qu'**en vue de la détermination de l'état de la chaussée, les signaux des capteurs de débattement (S_{F_VL}, S_{F_VR)} des suspensions de roue d'au moins un essieu du véhicule automobile sont évalués, moyennant quoi pour chaque suspension de roue une valeur de différence respective est formée par rapport au débattement (S_{F_VL_m}, S_{F_VR_m}), calculé en moyenne temporelle et utilisé comme valeur de référence, de la suspension de roue concernée.

14. Procédé selon au moins une des revendications 1 à 13, **caractérisé en ce qu'**en vue de la détermination de l'état de la chaussée, le signal d'un capteur de charge d'essieu (L_{V}, L_{H}) d'au moins un essieu du véhicule automobile est évalué, moyennant quoi pour chaque essieu du véhicule une valeur de différence respective est formée par rapport à la charge d'essieu (L_{V_m}, L_{H_m}), calculée en moyenne temporelle et utilisée comme valeur de référence, de l'essieu de véhicule respectif.

15. Procédé selon au moins une des revendications 1 à 14, **caractérisé en ce qu'**en vue de la détermination de l'état de la chaussée, le signal d'un capteur de débattement (S_{K}) d'au moins une suspension de cabine de l'habitacle du véhicule conçue avec ressort élastique est évaluée, moyennant quoi une valeur de différence est formée par rapport au débattement (S_{K_m}), calculé en moyenne temporelle et utilisé comme valeur de référence, de la suspension de cabine concernée.
